# EUROPEAN PATENT SPECIFICATION

(11) **EP 3 079 312 B1**
(45) Date of publication and mention of the grant of the patent: **25.07.2018**
(21) Application number: 14868632.2
(22) Date of filing: 01.07.2014
(51) Int. Cl.: H04L 12/58, H04L 29/08

(54) **METHOD OF SERVICE SYNCHRONIZATION AND SHARING AND MULTI-DEVICE CONTROL IN DIGITAL HOME**
VERFAHREN ZUR DIENSTSYNCHRONISATION UND -FREIGABE SOWIE STEUERUNG MEHRERER VORRICHTUNGEN IN EINEM DIGITALEN HAUSHALT
PROCÉDÉ POUR LA SYNCHRONISATION ET LE PARTAGE DE SERVICE ET LA COMMANDE DE PLUSIEURS DISPOSITIFS DANS UNE MAISON INTELLIGENTE

(30) Priority: 03.12.2013 CN 201310642371
(43) Date of publication of application: 12.10.2016
(73) Proprietor: Institute of Acoustics,Chinese Academy of Sciences, Haidian District Beijing 100190 (CN); Beijing Intellix Technologies Co. Ltd., Beijing 100190 (CN)
(72) Inventor: HU, Linlin, Beijing 100190 (CN); GUO, Zhichuan, Beijing 100190 (CN); ZHANG, Wu, Beijing 100190 (CN); WANG, Jinlin, Beijing 100190 (CN)
(74) Representative: Keilitz, Wolfgang
(86) International application number: PCT/CN2014/081416
(87) International publication number: WO 2015/081695

(56) References cited:
- CN-A- 1 463 122
- CN-A- 1 820 473
- CN-A- 101 043 512
- CN-A- 102 546 324
- CN-A- 102 625 007
- CN-Y- 201 425 714
- US-A1- 2007 174 297

## Description

### TECHNICAL FIELD

The present invention relates to the field of WEB technology, and in particular to a method of service synchronization and sharing and multi-device control in digital home.

### BACKGROUND

In a digital home, based on computer and web technologies, various home appliances may communicate and exchange data via different ways of connection to achieve interconnection there between so as to allow one to quickly and easily obtain information while staying at home, thereby greatly improving the comfort and entertainment of human living Digital television, as a key component of a digital home, is an important interface for a user to realize a digital life.

In a digital home, a user may wish to be able to achieve synchronized sharing of a certain service on multiple devices, and to achieve manipulation by multiple devices on the same service. For example, a television program may be simultaneously displayed on a digital television, a smart phone and a tablet computer, and each of the digital television, the smart phone and the tablet computer may perform operations such as on-demand playback, forward playback and pausing on the television program.

The realization of synchronized sharing of a service on multiple devices requires corresponding service logics. In the prior art, the service logics of synchronized sharing of a service is identical for different devices, and the service is presented identically on multiple devices; however, the different devices in fact have different display capabilities such that, for example, the resolution of a smart phone differs significantly from that of a tablet computer. Thus, this mode of employing identical service logics for synchronized sharing of the same service on different devices largely limits the presentation of the service, resulting in less satisfactory user experience.

US 2007/174297 A1 discloses a Remote User Interface (RUI) service and specifically relates to the issue of how to provide a service search User Interface (UI) to allow an RUI client, which is located inside a home network, to search for services that are present outside the home network.

### SUMMARY OF THE INVENTION

An objective of the present invention is to overcome the drawback of less satisfactory user experience due to the limitation on service presentation resulted from employing identical service logics for synchronized sharing of the same service on different devices in the prior art, and therefore providing a method capable of effectively improving the satisfaction of user experience. The invention is defined by the appended claims.

In order to achieve the above objective, the present invention provides a method of synchronized sharing and multi-device manipulation of a service in a digital home, comprising:
providing a plurality of subservices corresponding to different types of terminal devices in a webpage of a web service, splitting the web service into subservices with synchronous relations by a relay device between a web server and the terminal devices when the web service is requested, and pushing the subservices to the respective terminal devices; wherein the relay device comprises at least a browser and a web server module.

In the above technical solution, the method further comprises the following steps:
1) Storing a main service webpage of the web service in the web server, wherein the main service webpage of the web service is defined by a predefined way of subservice splitting and comprises a plurality of subservices with synchronous relations corresponding to different types of terminal devices;
2) Requesting for the main service webpage to the web server by the relay device and splitting it into a plurality of subservice webpages for different terminal devices;
3) Sending access requests to the relay device by the respective terminal devices;
4) Returning corresponding subservice webpages by the relay device according to the types of the terminal devices sending the requests;
5) Performing relevant processes in the subservice webpages by the respective terminal devices after receiving the subservice webpages, and maintaining communication with the relay device to ensure synchronized sharing between the subservice webpages and the main service webpage.

In the above technical solution, the method further comprises, before said step 1), a predefinition operation of setting a way of splitting a web service into different subservices, and assigning corresponding markers to various terminals accordingly.

In the above technical solution, in said step 1), the way of subservice splitting comprises the use of webpage tags or javascript interfaces.

In the above technical solution, in said step 2), said splitting the main service webpage into a plurality of subservice webpages for different terminal devices by the relay device comprises: extracting the content in markers representing different types of terminal devices and adding webpage headers thereto to generate corresponding subservice pages when the markers are encountered in the main service webpage.
the present invention has the following advantages:

By utilizing the method of the present invention, sharing of a service can be achieved with ordinary smart mobile devices such as cellphones, PDAs, etc. in a digital home network, and the service can be presented differently on different mobile devices in a more diversified manner.

### BRIEF DESCRIPTION OF THE DRAWINGS

Fig. 1 is a flowchart of a method of synchronized sharing and multi-device manipulation of a service in a digital home of the present invention;
Fig. 2 is a block diagram of system components involved in the method of synchronized sharing and multi-device manipulation of a service in a digital home of the present invention; and
Fig. 3 is a schematic diagram of a main service webpage involved in the present invention.

### DETAILED DESCRIPTION OF THE INVENTION

The present invention will be described in further detail in conjunction with the accompanying drawings.

A brief description of the application environment of the method of the present invention is provided before proceeding to a detailed description of the present invention.

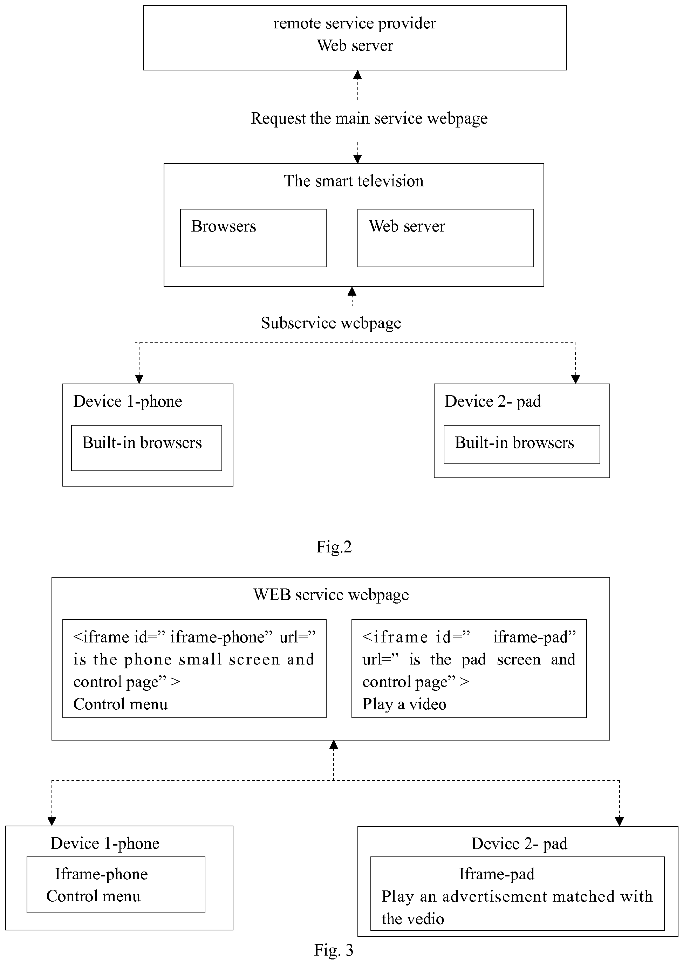

A digital home utilizing the method of the present invention comprises a relay device and terminal devices. The terminal devices may comprise a plurality of terminal devices such as a smart phone, a tablet computer and a smart television that can be connected with the relay device via wired or wireless links. There is at least one relay device comprising at least a browser and a web server. Existing smart televisions and set-top boxes available in the market may serve as the relay device. The relay device may be connected with a remote web server through a network. In an embodiment as shown in Fig. 2, the relay device is a smart television, and the terminal devices comprise a smart phone and a tablet computer. The method of the present invention is described below in connection with the embodiment.

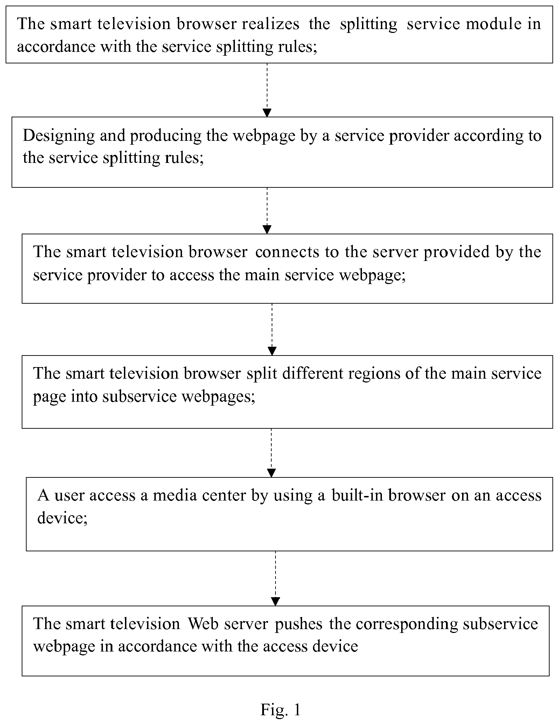

Referring to Fig. 1, the method of the present invention comprises the following steps:
1): setting a way of splitting a web service into different subservices, and assigning corresponding markers to various terminal devices accordingly.
   In the present embodiment, iframes are utilized as the way of splitting the web service into the different subservices, i.e., iframes are used to divide webpages of different subservices, and then the respective terminal devices are assigned with corresponding iframe IDs. For example, a corresponding iframe ID for the smart phone may be iframe-phone, and an iframe ID for the tablet computer may be iframe-pad. In other embodiments, different subservices may also be split using existing web technologies or by extending corresponding webpage tags or javascript interfaces.
2): producing a main service webpage of the web service by a service provider according to the way of subservice splitting defined in step 1).
   For example, in the present embodiment, a main service webpage of a video website comprises two subservices for smart phones and tablet computers, respectively. The subservice for smart phones comprises a service logic related to payment, and the subservice for tablet computers comprises a service logic related to video playback. Both of these subservices are contained in the same main service webpage but located within different iframe tags. The main service webpage thus produced is shown in FIG. 3, and is initially stored in a remote web server.
3): requesting for the main service webpage to the service provider's web server by the relay server, and parsing the main service webpage by the browser in the relay device and splitting it into a plurality of subservice webpages for different terminal devices after receiving data of the main service webpage; and providing the subservice webpages resulted from the splitting to the respective terminal devices by the web server in the relay device.
   For example, the browser in the smart television serving as the relay device extracts the content in tags such as iframe-phone, iframe-pad, etc. when encountering such tags in parsing the page, adds corresponding webpage headers to the content to generate corresponding subservice webpages, and stores them into corresponding directories of the web server in the smart television.
4): accessing the relay device by the respective terminal devices using their built-in browsers and a predetermined link.
   The predetermined link in the above step refers to the URL of the relay device.
5): returning corresponding subservice webpages by the relay device according to the types of terminal devices sending requests thereto.
   For example, the web server of the smart television determines that a terminal device is a smart phone according to a user agent of the browser of the terminal device when requesting the webpage, thereby returning the subservice webpage for iframe-phone.
6): performing relevant processes in the subservice webpages by the respective terminal devices after receiving the subservice webpages, and maintaining communication with the relay device to ensure synchronized sharing between the subservice webpages and the main service webpage.

In this application, the subservice webpages and the main service webpage are identical in their service logics, but may be presented in different ways. For example, a corresponding region of the main service webpage may play a video, while the subservices perform screenshotting and advertising matched with the time of the video.

Finally, it should be noted that, the embodiments above are only used for illustrating, rather than limiting the technical solutions of the present invention. Although the present invention has been described in detail with reference to the embodiments, the present invention is limited by the scope of the claims.

## Claims

1. A method of service synchronization, sharing and multi-device control in a digital home, comprising:
providing a plurality of subservices being suitable for different types of terminal devices in a webpage of a WEB server, and a webpage of a WEB service comprises the different subservices, and splitting the WEB service into subservices with synchronous relations by a relay device located between a web server and the terminal devices; when the WEB service is requested, conveying the subservices to the respective terminal devices; wherein the relay device comprises at least a browser and a web server module;
wherein the method further comprises the following steps:
1) storing a main service webpage of the WEB service in the web server, and the main service webpage of the WEB service comprises different subservices, wherein the main service webpage of the WEB service is defined by a predefined way of subservice splitting and comprises a plurality of subservices with synchronous relations being suitable for different types of terminal devices;
2) requesting the main service webpage from the web server by the relay device and splitting it into a plurality of subservice webpages for different terminal devices;
3) sending access requests to the relay device by the respective terminal devices;
4) returning corresponding subservice webpages by the relay device according to the types of the terminal devices sending the requests; and
5) performing relevant processes in the subservice webpages by the respective terminal devices after receiving the subservice webpages, and maintaining communication with the relay device to ensure synchronized sharing between the subservice webpages and the main service webpage.

2. The method of service synchronization and sharing and multi-device control in digital home according to claim 1, wherein the method further comprises, before said step 1), a predefinition operation of setting a way of splitting a WEB server into different subservices, and assigning corresponding markers to various terminals accordingly.

3. The method of service synchronization and sharing and multi-device control in digital home according to claim 1 or 2, wherein in said step 1), the way of subservice splitting comprises the use of webpage tags or javascript interfaces.

4. The method of service synchronization and sharing and multi-device control in digital home according to claim 1 or 2, wherein in said step 2), said splitting the main service webpage into a plurality of subservice webpages for different terminal devices by the relay device comprises: extracting the content in markers representing different types of terminal devices and adding webpage headers thereto to generate corresponding subservice pages when the markers are encountered in the main service webpage.

## Patentansprüche

1. Verfahren zur Synchronisierung und gemeinsamen Nutzung von Diensten und zur Steuerung mehrerer Geräte in einem digitalen Zuhause, umfassend:
Bereitstellen einer Vielzahl von Unterdiensten, die für verschiedene Arten von Endgeräten in einer Webseite eines WEB-Servers geeignet sind, wobei eine Webseite eines WEB-Dienstes die verschiedenen Unterdienste umfasst; und das Aufteilen des WEB-Dienstes in Unterdienste mit synchronen Beziehungen durch eine zwischen einem Webserver und den Endgeräteen angeordnetes Relaisvorrichtung; wenn der WEB-Dienst angefordert wird, Übermitteln der Unterdienste an die jeweiligen Endgeräte; wobei die Relaisvorrichtung mindestens einen Browser und ein Web-Server-Modul umfasst;
wobei das Verfahren weiterhin die folgenden Schritte umfasst:
1) Speichern einer Hauptdienstwebseite des WEB-Dienstes auf dem Webserver, wobei die Hauptdienstwebseite des WEB-Dienstes verschiedene Unterdienste umfasst, wobei die Hauptdienstwebseite des WEB-Dienstes durch eine vordefinierte Art der Unterdienstaufteilung definiert ist und mehrere Unterdienste mit synchronen Beziehungen aufweist, die für verschiedene Arten von Endgeräten geeignet sind;
2) Anfordern der Hauptdienst-Webseite von dem Webserver durch die Relaisvorrichtung und Aufteilen derselben in eine Vielzahl von Unterdienst-Webseiten für unterschiedliche Endgeräte;
3) Senden von Zugriffsanforderungen an die Relaisvorrichtung durch die jeweiligen Endgeräte;
4) Zurückgeben entsprechender Subservice-Webseiten durch die Relaisvorrichtung entsprechend der Typen der Endgeräte, die die Anforderungen senden; und
5) Durchführen relevanter Prozesse in den Subservice-Webseiten durch die jeweiligen Endgeräte nach dem Empfangen der Subservice-Webseiten und Aufrechterhalten der Kommunikation mit der Relaisvorrichtung, um ein synchronisiertes Teilen zwischen den Subservice-Webseiten und der Hauptservice-Webseite sicherzustellen.

2. Verfahren zur Synchronisierung und gemeinsamen Nutzung von Diensten und zur Steuerung mehrerer Geräte in einem digitalen Zuhause nach Anspruch 1, wobei das Verfahren ferner vor dem Schritt 1) eine vorgegebene Operation zum Einstellen eines Wegs zum Aufspalten eines WEB-Dienstes in verschiedene Unterdienste umfasst und verschiedenen Endgeräten entsprechende Markierungen entsprechend zuweist.

3. Verfahren zur Synchronisierung und gemeinsamen Nutzung von Diensten und zur Steuerung mehrerer Geräte in einem digitalen Zuhause nach Anspruch 1 oder 2, wobei in Schritt 1) die Art der Unterdienstaufteilung die Verwendung von Webseiten-Tags oder Javascript-Schnittstellen umfasst.

4. Verfahren zur Synchronisierung und gemeinsamen Nutzung von Diensten und zur Steuerung mehrerer Geräte in einem digitalen Zuhause nach Anspruch 1 oder 2, wobei in Schritt 2) das Aufteilen der Hauptdienst-Webseite durch die Relaisvorrichtung in mehrere Unterdienst-Webseiten für verschiedene Endgeräte umfasst: das Extrahieren des Inhalts in Markierungen, die verschiedene Arten von Endgeräten repräsentieren, und das Hinzufügen von Webseiten-Headern, um entsprechende Unterdienstseiten zu erzeugen, wenn die Markierungen in der Hauptdienstwebseite aufgefunden werden.

## Revendications

1. Procédé de partage de synchronisation de services et de commande de dispositifs multiples dans une maison numérique, comprenant :
la fourniture d'une pluralité de sous-services étant appropriés pour différents types de dispositifs terminaux dans une page Web d'un serveur WEB, et une page Web d'un service WEB comprend les différents sous-services et la séparation du service WEB en sous-services avec des relations synchrones par un dispositif relais situé entre un serveur Web et les dispositifs terminaux ;
lorsque le service WEB est requis, l'acheminement des sous-services aux dispositifs terminaux respectifs ; le dispositif relais comprenant au moins un navigateur et un module de serveur Web ;
le procédé comprenant en outre les étapes suivantes consistant à :
1) stocker une page Web principale de service du service WEB dans le serveur Web et la page Web principale de service du service WEB comprend différents sous-services, la page Web principale de service du service WEB étant définie d'une manière prédéfinie d'une séparation de sous-services et comprenant une pluralité de sous-services avec des relations synchrones étant adaptées à différents types de dispositifs terminaux ;
2) demander la page Web principale de service depuis le serveur Web par le dispositif relais et la séparer en une pluralité de pages Web de sous-services pour différents dispositifs terminaux ;
3) envoyer des demandes d'accès au dispositif relais par les dispositifs terminaux respectifs ;
4) renvoyer des pages Web de sous-services correspondants par le dispositif relais en fonction des types de dispositifs terminaux envoyant les demandes ; et
5) réaliser des processus pertinents dans les pages Web de sous-service par les dispositifs terminaux respectifs après avoir reçu les pages Web de sous-service, et maintenir la communication avec le dispositif relais pour s'assurer du partage synchronisé entre les pages Web de sous-service et la page Web principale de service.

2. Procédé de synchronisation de services et de partage et de commande de dispositifs multiples dans une maison numérique selon la revendication 1, le procédé comprenant en outre, avant ladite étape 1), une opération de prédéfinition consistant à définir une manière de partager un serveur WEB en différents sous-services et attribuer des marqueurs correspondants à divers terminaux en conséquence.

3. Procédé de synchronisation de services et de partage et de commande de dispositifs multiples dans une maison numérique selon la revendication 1 ou 2, dans lequel dans ladite étape 1), la manière de séparer les sous-services comprend l'utilisation d'étiquettes de pages Web ou d'interfaces JavaScript.

4. Procédé de synchronisation de services et de partage et de commande de dispositifs multiples dans une maison numérique selon la revendication 1 ou 2, dans lequel dans ladite étape 2), ladite séparation de la page Web principale de service en une pluralité de pages Web de sous-services pour différents dispositifs terminaux par le dispositif relais comprend : l'extraction du contenu dans des marqueurs représentant différents types de dispositifs terminaux et l'ajout d'en-têtes de pages Web à ceux-ci pour générer des pages de sous-services correspondantes lorsque les marqueurs sont rencontrés dans la page Web principale de service.
